# EUROPÄISCHE PATENTSCHRIFT

(11) **EP 0 486 808 B1**
(45) Veröffentlichungstag und Bekanntmachung des Hinweises auf die Patenterteilung: **13.09.1995**
(21) Anmeldenummer: 91117446.4
(22) Anmeldetag: 12.10.1991
(51) Int. Cl.: A47J 47/18, B65D 43/10

(54) **Topfförmiges Gefäss, insbesondere Eimer, mit Deckel**
Pot-shaped container, in particular a bucket, with lid
Récipient en forme de pot, en particulier un seau, avec couvercle

(30) Priorität: 22.11.1990 DE 9015918 U
(43) Veröffentlichungstag der Anmeldung: 27.05.1992
(73) Patentinhaber: SAIER GmbH & Co., D-72275 Alpirsbach (DE)
(72) Erfinder: Binder, Hans, W-7297 Alpirsbach 1-Peterzell (DE)
(74) Vertreter: Schmid, Berthold, Dipl.-Ing.

(56) Entgegenhaltungen:
- DE-A- 3 313 059
- DE-U- 8 807 801
- DE-U- 9 015 918
- WO 90/09329

## Beschreibung

Die vorliegende Erfindung bezieht sich auf ein topfförmiges Gefäß, insbesondere einen Eimer od.dgl., mit einem äußeren Befestigungsrand, dessen freie Kante etwa entgegen dem freien Gefäßrand weist und mit einem zugehörigen Deckel, der lösbar mit dem Gefäß verbunden ist, wobei der Rand des Deckels ein im Querschnitt etwa U-förmiges, gegenüber dem Gefäßrand hin offenes Profil aufweist, dessen innerer Schenkel einen den Gefäßrand von außen umgebenden Stützrand bildet und dessen äußerer Schenkel in einen den äußeren Befestigungsrand des Gefäßes hintergreifenden Rastrand ausläuft.

Ein derartiges Gefäß ist beispielsweise bekannt geworden durch die deutsche Patentschrift 31 40 234. Bei dem zu diesem Gefäß gehörigen, als Napf gestalteten Deckel ist in dem nach unten hin offenen U-Profil des Deckelrandes eine in dieses Profil hineinragende Führungsrippe angeformt, die zusammen mit dem Innenflansch des Deckelnapfes eine im Querschnitt U-förmige Rinne bildet und, wenn der Deckel auf das eimerförmige Gefäß aufgesetzt wird, den Eimerrand von außen hintergreift. Durch den Innenflansch des Deckels und diese Führungsrippe wird der Deckel gegenüber den Gefäß so fixiert, daß ein Verrutschen des Deckels nicht mehr möglich ist. Wird ferner von oben her in den napfartigen Deckel ein gleichartigen Gefäß eingesetzt, so wird der Deckel durch die den umlaufenden Innenflansch des napfartigen Deckels ebenfalls gegen ein Verrutschen gesichert. Durch das Gewicht dieses in den Deckel eingesetzten Gefäßes wird gleichzeitig auf den Deckelrand ein radial gegen die vertikale Mittelachse des Gefäßes gerichteter Zug bewirkt, der jedoch von der in einem Abstand von dem Innenflansch befindlichen Führungsrippe aufgenommen wird, die sich selbst wieder an der Außenkante des oberen Gefäßrandes abstützt. Diese Führungsrippe verhindert somit, daß der auf dem Gefäß sitzende Deckel durch das Gewicht des in den Deckel eingesetzten weiteren Gefäßes in die Gefäßöffnung hineingezogen wird.

Aus WO 90/09329 ist ein Deckel für ein Gefäß bekannt, bei dem der Deckel napfartig ausgebildet ist und dessen Napfrand an der gegenüberliegenden Innenseite des Gefäßrandes anliegt. Hierbei ist eine Führungsrippe am Deckel vorgesehen, welche aber die Außenfläche des Behälters berührt und keine Kraftübertragung von Deckel zu Gefäß gestattet.

Des öfteren ist es nunmehr wünschenswert, daß zwischen der Deckelinnenseite und der dem Deckel zugekehrten Stirnseite des Gefäßrandes noch ein Zwischenraum verbleibt, wie dieses insbesondere dann notwendig ist, wenn die Deckelöffnung durch eine Folie od.dgl. versiegelt werden soll.

Diese Aufgabe wird gemäß der vorliegenden Erfindung nur dadurch gelöst, daß der in das Profil des Gefäßdeckels hineinragende Stützrand bis zum äußeren Befestigungsrand des Gefäßes vorsteht und nach dem Aufbringen des Gefäßdeckels auf den Gefäßrand mit seiner Stirnkante satt auf diesem Befestigungsrand des Gefäßes aufsitzt. Damit aber werden die beispielsweise von einem gestapelten Gefäß auf den Deckel ausgeübten Kräfte eben über diesen Stützrand auf den Befestigungsrand des Gefäßes und damit auch auf die Gefäßwandung sicher übertragen. Dadurch wieder ist der den Befestigungsrand des Gefäßes hintergreifende Rastrand des Deckels nicht mehr so stark belastet und kann somit bei einer Belastung des betreffenden Gefäßes auch nicht mehr ausrasten. Dieser Rastrand dient somit nur noch als Formabschluß und kann auch in seinen Abmessungen kleiner gehalten werden, was eine Erleichterung sowohl beim Aufbringen als auch beim Abnehmen des Deckels bedeutet und darüber hinaus auch die Fertigung dieses Deckels vereinfacht.

Ist der Gefäßdeckel in an sich bekannter Weise napfartig ausgebildet und liegt er mit der Außenseite seines Napfrandes satt und abdichtend an der ihm gegenüberstehenden Innenseite des benachbarten Gefäßrandes an, so ist es ferner vorteilhaft, wenn in vorzugsweise gleichen Winkelabständen an dem Napfrand radial nach innen vorstehende nockenartige Vorsprünge angeformt sind, die sowohl als Anlage für gleichartige, in dem besagten Deckelnapf einsetzbare Gefäße als auch dem Stapeln einer Vielzahl gleichartiger Deckel dienen. Insbesondere durch diese Gestaltung ist die Unterseite des Gefäßdeckels weitgehend glatt, so daß das Füllgut nicht mehr so leicht an der Deckelunterseite haften kann und auch keine Verkrustung desselben mehr auftritt. Infolge der Kastenform dieser Vorsprünge sind dieselben sehr steif und damit geeignet, beim Stapeln einer Vielzahl gleichartiger Deckel ein hohes Gewicht aufzunehmen.

In diesem Zusammenhang ist es ferner noch zweckmäßig, wenn die der Mittelachse des Gefäßes zugekehrte Seite jedes dieser Vorsprüge derart gegenüber der Vertikalen nach außen geneigt ist, daß der Unterteil eines auf das Gefäß aufzusetzenden gleichartigen Gefäßes leicht in den Napf des Gehäusedeckels hineinrutscht.

Um auch eine Vielzahl von derartigen Gefäßen zugeführter Gefäßdeckel leicht stapeln zu können, ist es zweckdienlich, wenn in dem Außenmantel des Profiles dieser Gehäusedeckel eine durchgehende Abkröpfung eingeformt ist zur Bildung eines gegenüber der Profiloberseite versetzten Stützrandes, auf dem ein gleichartiger Gefäßdeckel mit der unteren Stirnseite seines Rastrandes abstützbar ist. Dabei kann benachbart zum Rastrand jedes dieser Gehäusedeckel vorzugsweise durchgehend ein nach unten vorstehender Steg od.dgl. angeformt sein, der, wenn der Gehäusedeckel auf einem gleichartigen Deckel aufsitzt, wieder um den Außenrand des unteren Deckels herumgreift und so den oberen Deckel gegen ein Verrutschen sichert.

Weitere Einzelheiten der Erfindung ergeben sich aus der folgenden Beschreibung von zwei auf der Zeichnung dargestellten beispielsweisen Ausführungsformen sowie den sich hieran anschließenden Ansprüchen. Es zeigen:
- Fig. 1: den teilweisen Querschnitt des erfindungsgemäßen Gefäßes mit dem aufgesetzten Deckel in seiner Schließstellung,
- Fig. 2: eine der Fig. 1 entsprechende Schnittdarstellung eines mit einem napfartigen Deckel abgeschlossenen Gefäßes,
- Fig. 3: eine teilweise Draufsicht auf den Gefäßdeckel,
- Fig. 4: einen Schnitt gemäß der Linie 4 - 4 und
- Fig. 5: den teilweisen Schnitt von zwei gestapelten Deckeln.

Das erfindungsgemäße Gefäß, beispielsweise ein aus Kunststoff gefertigter Eimer 1, weist in bekannter Weise in seinem oberen Bereich einen nach unten und außen gerichteten, im Querschnitt bogenförmigen Befestigungsrand 2 auf, dessen Unterkante mit 3 bezeichnet ist. Der Eimerrand 4 dagegen steht dabei nur geringfügig über diesen Befestigungsrand 2 nach oben hin vor. Gegebenenfalls kann dieser Befestigungsrand 2 auch noch durch nicht besonders dargestellte Querrippen gegenüber der Eimerwandung 5 hin abgestützt sein.

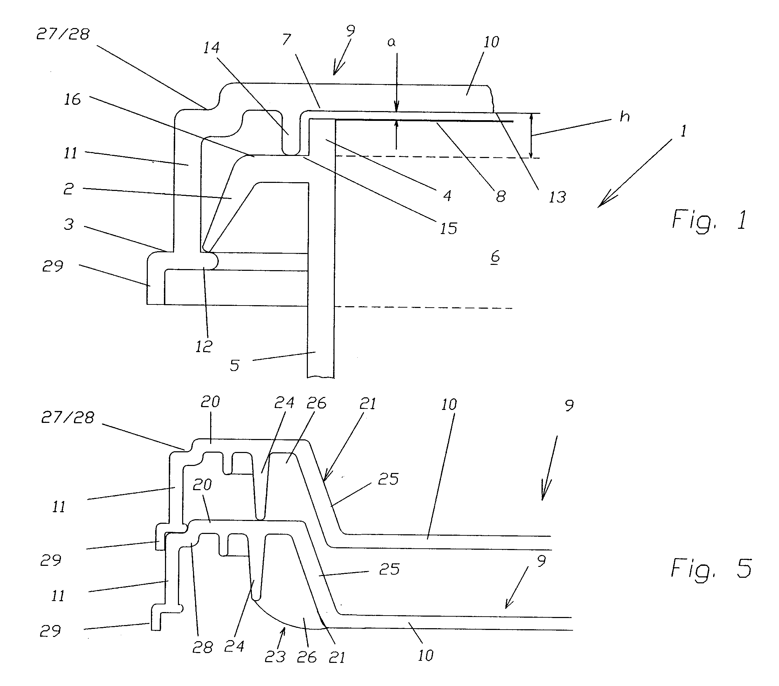

Bei dieser in der Fig. 1 dargestellten Ausführungsform ist die mit 6 bezeichnete Eimeröffnung durch eine auf die Stirnseite 7 des Eimerrandes 4 aufgeschweißte Folie 8 abgedeckt und damit sicher versiegelt.

Was nun den auf diesem Eimer 1 aufgesetzten Deckel 9 betrifft, so besteht dieser aus einer Deckelplatte 10 sowie einem an dieser angeformten Deckelrand 11, der in bekannter Weise in einen die Unterkante 3 des Befestigungsrandes 2 hintergreifenden Rastrand 12 ausläuft.

Wie sich weiter aus der Fig. 1 ergibt, so ist außerhalb des Eimerrandes 4 an der Innenseite 13 der Deckelplatte 10 noch ein mit 14 bezeichneter Stützrand angeformt, der bis zum Befestigungsrand 2 vorsteht und mit seiner Stirnkante 15 satt auf der Oberseite 16 des Befestigungsrandes 2 aufsitzt. Die Höhe h dieses Stützrandes 14 ist dabei so bemessen, daß zwischen der Oberseite der die Eimeröffnung 6 abdeckenden Folie 8 und der Innenseite 13 des Deckels 9 noch ein mit a bezeichneter Abstand verbleibt. Dieser Stützrand 14 dient dabei nicht nur der Übertragung von auf die Deckelplatte 10 einwirkenden Kräften auf den Befestigungsrand 2 und damit auch auf den Eimer 1, sondern er zentriert gleichzeitig auch den Eimerdeckel 9 gegenüber dem Eimerrand 4 und verhindert damit gleichzeitig auch, daß der Eimerdeckel 9 eventuell durch eine auf ihn einwirkende Last in die Eimeröffnung 6 hineingezogen wird.

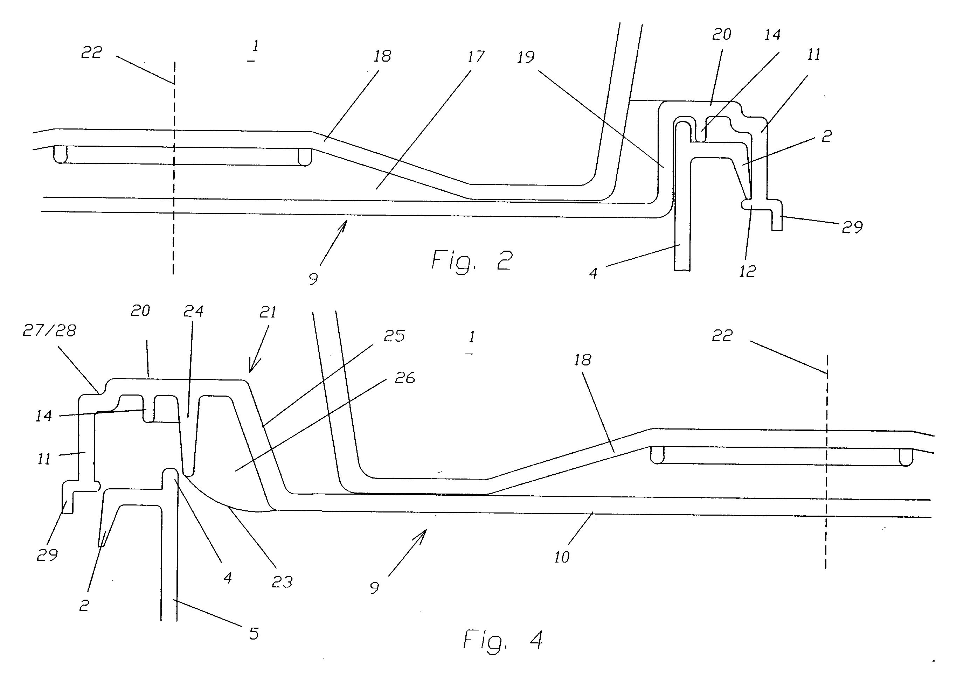

Die nachfolgenden Fign. 2 bis 4 zeigen eine andere Ausführungsform, bei der die gleichen Bauteile wieder durch die gleichen Bezugszeichen gekennzeichnet sind. In diesem Fall weist der Eimerdeckel 9 jedoch eine mit 17 bezeichnete napfartige Öffnung auf, in die ein gleichartiger Eimer 1 mit seinem Unterteil 18 hineingesetzt werden kann. Der mit 19 bezeichnete Napfrand bildet dabei zusammen mit dem Deckelrand 11 ein U-förmiges Profil, an dessen Steg 20 der zuvor schon behandelte Stützrand 14 angeformt ist. Die Bedeutung und die Wirkungsweise dieses Stützrandes 14 ist dabei praktisch die gleiche wie diese schon zuvor im Zusammenhang mit der in der Fig. 1 dargestellten Ausführungsform beschrieben worden ist.

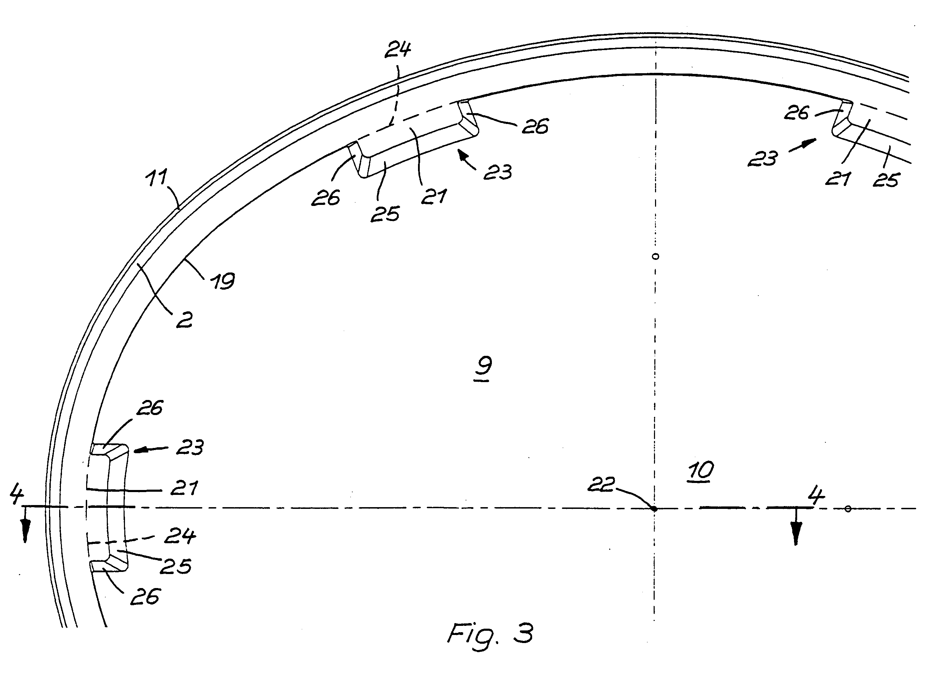

Wie sich weiter aus der Fig. 3 ergibt, so sind an dem Napfrand 19 in Abständen von etwa 60 Winkelgraden mit 21 bezeichnete Vorsprünge angeformt, die in radialer Richtung gegen die in der Fig. 3 mit 22 bezeichnete Eimerachse vorstehen. Diese Vorsprünge 21 weisen dabei die Gestalt eines besonders steifen Kastens 23 auf, der aus einer in der verlängerten Ebene des Napfrandes 19 befindlichen Stützrippe 24, der der Eimerachse 22 zugekehrten Stirnwand 25 sowie den beiden die Stützrippe 24 mit der Stirnwand 25 verbindenden Seitenwänden 26 gebildet ist. Die Stirnwand 25 jedes Vorsprunges 21 ist dabei derart gegenüber der vertikalen Eimerachse 22 nach außen geneigt, daß sie, wie aus der Fig. 4 ersichtlich, schräg gestellt ist und somit alle sechs Stirnwände 25 trichterähnlich geneigte Führungsflächen bilden, die das Einsetzen des oberen Eimers 1 in die napfförmige Öffnung 17 des zu dem unteren Eimer 1 gehörigen Deckels 9 erleichtern. Diese Vorsprünge 21 fixieren dabei gleichzeitig jeweils auch den oberen Eimer 1 und verhindern somit ein Verrutschen desselben gegenüber dem unteren Eimer 1. Außerdem dienen diese Vorsprünge 21 gleichzeitig auch als Auflager für einen auf einen unteren Deckel 9 aufzusetzenden oberen Deckel 9. Da diese kastenförmigen Vorsprünge 21 außerordentlich steif und damit auch sehr tragfähig sind, ist hierdurch eine sichere Stapelung einer Vielzahl derartiger Deckel 9 möglich.

Gemäß den Fign. 1 und 5 ist in dem Deckelrand 11 zur Bildung eines Stützrandes 27 noch eine mit 28 bezeichnete Abkröpfung eingeformt. Außerdem ist benachbart zum Rastrand 12 des Deckelrandes 11 noch zusätzlich ein nach unter vorstehender Steg 29 angeformt. Wie insbesondere aus der Fig. 5 ersichtlich ist, so dienen sowohl die Abkröpfung 28 als auch der Steg 29 der in der Fig. 5 dargestellten Stapelung mehrere Eimerdeckel 9, wobei dann der obere Eimerdeckel 9 jeweils sowohl mit der Stützrippe 24 des kastenförmigen Vorsprunges 21 auf dem Steg 20 des Napfrandes 19 als auch mit seinem Rastrand 12 auf dem durch die Abkröpfung 28 gebildeten Stützrand 27 aufsitzt. Dabei greift dann der benachbart zu diesem Rastrand 12 befindliche Steg 29 so um den Rand 11 des unteren Deckels 9 herum, daß der obere Deckel 9 gegenüber dem unteren Deckel 9 sicher zentriert und gegen ein unerwünschtes Verrutschen gesichert ist.

## Patentansprüche

1. Topfförmiges Gefäß, insbesondere Eimer od.dgl., mit einem äußeren Befestigungsrand, dessen freie Kante etwa entgegen dem freien Gefäßrand weist und mit einem zugehörigen Deckel, der lösbar mit dem Gefäß verbunden ist, wobei der Rand des Deckels ein im Querschnitt etwa U-förmiges, gegen den Gefäßrand hin offenes Profil aufweist, dessen innerer Schenkel einen den Gefäßrand umgebenden Stützrand bildet und dessen äußerer Schenkel in einen den äußeren Befestigungsrand des Gefäßes hintergreifenden Rastrand ausläuft, dadurch gekennzeichnet, daß der Stützrand (14) bis zum äußeren Befestigungsrand (2) des Gefäßes (1) vorsteht und mit seiner Stirnkante (15) satt auf diesem Befestigungsrand (2) aufsitzt.

2. Gefäß nach Anspruch 1, dadurch gekennzeichnet, daß der Gefäßdeckel (9) napfartig ausgebildet ist und mit der Außenseite seines Napfrandes (19) satt und abdichtend an der ihm gegenüberstehenden Innenseite des benachbarten Gefäßrandes (5) anliegt, wobei in vorzugsweise gleichen Winkelabständen an dem Napfrand (19) radial nach innen vorstehende kastenförmige Vorsprünge (21) angeformt sind, die sowohl als Anlage für gleichartige, in den Deckelnapf einsetzbare Gefäße (1) als auch dem Stapeln einer Vielzahl gleichartiger Deckel (9) dienen.

3. Gefäß nach Anspruch 2, dadurch gekennzeichnet, daß die der Mittelachse (22) des Gefäßes (1) zugekehrte Seite (25) jedes Vorsprunges (21) gegenüber der Vertikalen (22) nach außen geneigt ist.

4. Gefäß nach einem oder mehreren der Ansprüche 1 bis 3, dadurch gekennzeichnet, daß in dem Außenmantel (11) des Deckelprofiles eine durchgehende Abkröpfung (28) eingeformt ist zur Bildung eines gegenüber der Profiloberseite (20) versetzten Stützrandes (27), auf dem ein gleichartiger Gefäßdeckel (9) mit der unteren Stirnseite seines Rastrandes (12) absetzbar ist.

5. Gefäß nach Anspruch 4, dadurch gekennzeichnet, daß benachbart zum Rastrand (12) des Gefäßdeckels (9) vorzugsweise durchgehend ein nach unten vorstehender Steg (29) oder auch nur einzelne Vorsprünge od.dgl. angeformt sind.

## Claims

1. Pot-shaped vessel in particular a bucket or the like having an outer attachment rim whose free edge faces generally away from the free rim of the vessel and having an associated lid which is connected to the vessel in a detachable fashion, whereby the rim of the lid comprises a profile having a cross section which is generally U-shaped and opens towards the rim of the vessel and whose inner leg forms a support rim surrounding the vessel rim and whose outer leg joins into a seating rim engaging the outer attachment rim of the vessel, characterized in that the support rim (14) protrudes to the outer attachment rim (2) of the vessel (1) and seats fully, with its front edge (15) on this attachment rim (2).

2. Vessel according to claim 1, characterized in that the vessel lid (9) is formed in a bowl-like fashion and seats, at the outer side of its bowl rim (19), fully and in a sealing fashion on the oppositely located inner side of the neighbouring vessel rim (5), whereby box-shaped projections (21) are formed on the bowl rim (19) at preferentially equal angular separations which protrude radially inwardly and which serve both as a seating for similar vessels (1) which can be placed into the bowl lid as well as for the stacking of a plurality of similar lids (9).

3. Vessel according to claim 2, characterized in that the side (25) of each projection (21) facing the central axis (22) of the vessel (1) is tilted outwardly with respect to the vertical (22).

4. Vessel according to one or more of the claims 1 through 3, characterized in that a continuous crimp (28) is fashioned in the outer jacket (11) of the lid profile to form a support rim (27) displaced relative to the upper side of the profile (20) upon which a similar vessel lid (9) can be seated with the lower end side of its seating rim (12).

5. Vessel according to claim 4, characterized in that a preferentially continuous downwardly protruding strut (29) or only separated projections or the like are formed proximate to the seating rim (12) of the vessel lid (9).

## Revendications

1. Récipient en forme de pot, en particulier un seau ou similaire, avec un bord de fixation extérieur dont l'arête libre est orientée approximativement à l'opposé du bord libre du récipient, et avec un couvercle associé qui est assemblé de manière amovible au récipient, le bord du couvercle présentant un profil à section approximativement en forme de U, ouvert vers le bord du récipient, dont la branche intérieure forme un bord d'appui entourant le bord du récipient et dont la branche extérieure se termine par un bord d'arrêt venant en prise derrière le bord de fixation extérieur du récipient, **caractérisé** en ce que le bord d'appui (14) dépasse jusqu'au bord de fixation extérieur (2) du récipient (1) et repose à plat joint sur ce bord de fixation (2) par son arête frontale (15).

2. Récipient selon la revendication 1, **caractérisé** en ce que le couvercle de récipient (9) est configuré en forme de cuvette et, par le côté extérieur de son bord de cuvette (19), s'applique à plat joint et en étanchéité contre le côté intérieur, qui lui fait face, du bord voisin (5) du récipient, des saillies (21) en forme de caisson, dépassant radialement vers l'intérieur, étant formées de préférence à des distances angulaires identiques sur le bord de cuvette (19), saillies qui servent aussi bien d'éléments d'appui pour des récipients (1) de même type pouvant être insérés dans la cuvette de couvercle, qu'à l'empilage d'une pluralité de couvercles (9) de même type.

3. Récipient selon la revendication 2, **caractérisé** en ce que le côté (25) de chaque saillie (21) qui est tourné vers l'axe médian (22) du récipient est incliné vers l'extérieur par rapport à la verticale (22).

4. Récipient selon une ou plusieurs des revendications 1 à 3, **caractérisé** en ce qu'un contre-coudage ininterrompu (28) est formé dans l'enveloppe extérieure (11) du profil de couvercle afin de constituer un bord d'appui (27), décalé par rapport au côté supérieur (20) du profil et sur lequel un couvercle de récipient (9) de même type peut être déposé par le côté frontal inférieur de son bord d'arrêt (12).

5. Récipient selon la revendication 4, **caractérisé** en ce qu'une nervure (29) de préférence ininterrompue dépassant vers le bas, ou bien seulement des saillies individuelles ou similaires, sont formées au voisinage du bord d'arrêt (12) du couvercle de récipient (9).
